Europäisches Patentamt

European Patent Office

Office européen des brevets

(11) Veröffentlichungsnummer: **0 386 659**
**A2**

(12) **EUROPÄISCHE PATENTANMELDUNG**

(21) Anmeldenummer: **90104131.9**

(22) Anmeldetag: **02.03.90**

(51) Int. Cl.5: **H04B 3/54, H04L 25/02**

(30) Priorität: **09.03.89 DE 3907652**

(43) Veröffentlichungstag der Anmeldung:
**12.09.90 Patentblatt 90/37**

(84) Benannte Vertragsstaaten:
**AT BE CH DE FR GB LI SE**

(71) Anmelder: **Siemens Aktiengesellschaft**
**Wittelsbacherplatz 2**
**D-8000 München 2(DE)**

(72) Erfinder: **Muhr, Andreas, Dipl.-Ing. (FH)**
**Starenweg 1**
**D-7515 Linkenheim(DE)**
Erfinder: **Thamm, Peter, Dr.-Ing.**
**Posseltstrasse 17 a**
**D-7500 Karlsruhe 41(DE)**

(54) **Schaltungsanordnung zum Übertragen von binären Signalen und Energie über eine Leitung.**

(57) Zum Übertragen des Versorgungsstromes von peripheren Teilnehmern eines eigensicheren Netzwerkes ist in der Zentrale (ZE) eine Stromversorgungseinheit (SQ, RV, ZD) vorgesehen, deren Ausgangsstrom und -spannung auf den Anforderungen für Eigensicherheit entsprechende Werte begrenzt sind. Die peripheren Einheiten (PE1, PE2) enthalten als Energiespeicher Kondensatoren (C), die während bestimmter, zwischen den Übertragungstelegrammen liegender Zeitabschnitte aufgeladen werden.

Die Erfindung wird eingesetzt bei Netzwerken der Prozeßtechnik mit Zweidraht-Busleitungen.

## Schaltungsanordnung zum Übertragen von binären Signalen und Energie über eine Leitung

Aus der DE-OS 36 44 868 ist es bekannt, Teilnehmer eines lokalen Netzwerkes über die Datenübertragungsleitung mit Energie zu versorgen. Hierzu wird in die Leitung eine Wechselspannung eingespeist, die mittels Übertrager in die einzelnen Teilnehmer gekoppelt und dort gleichgerichtet wird. Ein Kondensator oder ein Akkumulator dient als Energiespeicher für die gleichgerichtete Spannung. Die Daten werden durch Modulation der Wechselspannung übertragen.

Der vorliegenden Erfindung liegt die Aufgabe zugrunde, eine Schaltungsanordnung zum gleichzeitigen Übertragen von Daten und der Energie zur Versorgung von peripheren Einheiten über eine einzige Leitung zu schaffen, wobei die Energie als Gleichstrom übertragen wird.

Erfindungsgemäß wird diese Aufgabe mit den im kennzeichnenden Teil des Anspruchs 1 angegebenen Maßnahmen gelöst.

Damit vor allem bei entladenem Kondensator die Datenübertragung wegen des niedrigen Durchlaßwiderstandes der Diode nicht beeinträchtigt wird, ist zweckmäßig der Diode ein Widerstand in Reihe geschaltet, der den Ladestrom des Kondensators auf einen solchen Wert begrenzt, daß die Amplitude der Binärsignale auf der Leitung einen vorgegebenen Wert nicht unterschreitet. Der Kondensator wird immer dann aufgeladen, wenn das Binärsignal H ist, also auch während der normalen Datenübertragung. Da dieser Strom vor allem bei einer Vielzahl von peripheren Einheiten für die Energieversorgung nicht ausreicht, kann statt des Widerstandes oder auch zusätzlich ein Schalter vorgesehen sein, der während bestimmter, zwischen den Datentelegrammen liegender Zeitabschnitte geschlossen wird, so daß die Kondensatoren der Teilnehmer niederohmig an der Leitung liegen. Die Ladeströme können dennoch auf niedrige Werte begrenzt sein, z. B. dann, wenn die peripheren Einheiten in explosionsgefährdeten Bereichen angeordnet sind und die in die Leitung eingespeisten Ströme und Spannungen auf Werte begrenzt sind, die den Forderungen der Eigensicherheit entsprechen.

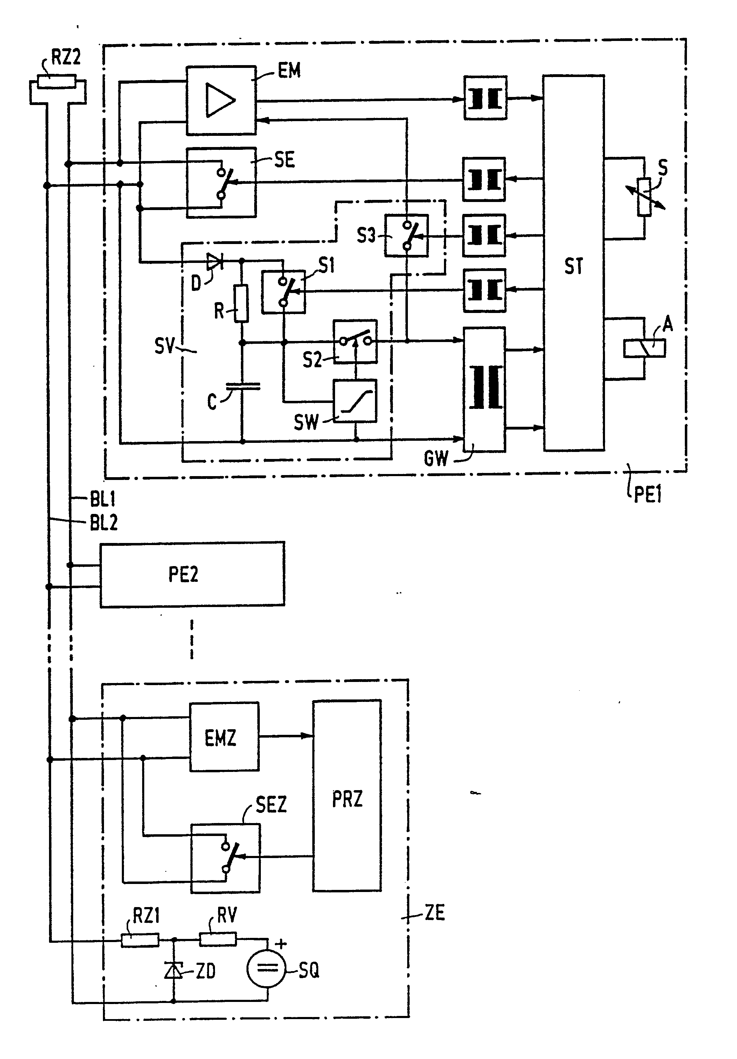

Anhand der Zeichnung werden im folgenden die Erfindung sowie weitere Ausgestaltungen und Vorteile näher beschrieben und erläutert.

Mit BL1, BL2 sind die beiden Adern einer zweiadrigen Busleitung bezeichnet, an die mehrere periphere Einheiten PE1, PE2 ... und eine Zentraleinheit ZE angeschlossen sind. Die peripheren Einheiten sind in einer Umgebung angebracht, in der zündfähige Gasgemische auftreten können. Die Zentraleinheit enthält eine Spannungsquelle SQ, von der über einen Strombegrenzungswiderstand RV und einen Widerstand RZ1, der gleich dem Wellenwiderstand der Busleitung ist, ein Strom und eine Spannung eingespeist werden. Die Spannung, die durch eine Zenerdiode ZD begrenzt ist, und der Begrenzungswiderstand RV sind so bemessen, daß die für die Eigensicherheit maximal zulässigen Werte von Strom und Spannung nicht überschritten werden. Die Busleitung ist mit einem Widerstand RZ2, der ebenfalls gleich dem Wellenwiderstand ist, abgeschlossen. Zum Senden von binären Signalen betätigt ein in der Zentraleinheit enthaltener Prozessor PRZ einen Schalter SEZ, der in geschlossenem Zustand die Busleitung kurzschließt. Entsprechende Sendeschalter SE enthalten die peripheren Einheiten PE1, PE2 ... Sind alle Schalter geöffnet, liegt etwa die halbe Zenerdiodenspannung auf der Busleitung, entsprechend dem binären Signalzustand H. Ist ein Schalter geschlossen, wird die Spannung auf der Busleitung etwa Null (Binärsignalzustand L). Die von einer Einheit ausgesandten binären Signale werden von allen peripheren Einheiten mit Empfängern EM empfangen und einer Steuerung ST zugeführt. In der Zentralen ZE werden die Signale von einem Empfänger EMZ empfangen und im Prozessor PRZ verarbeitet, an die Steuerungen sind jeweils mehrere Sensoren S und/oder oder Aktoren A angeschlossen. Die Ausgangssignale der Sensoren werden von den Steuerungen abgefragt, soweit sie analog sind in Digitalsignale umgesetzt und gegebenenfalls nach einer Vorverarbeitung über die Busleitung zur Zentraleinheit ZE oder einer anderen peripheren Einheit übertragen. Die Aktoren A werden aufgrund der empfangenen Signale angesteuert. Im Ausführungsbeispiel sind die Steuerungen mit den Sensoren und Aktoren galvanisch von den Empfängern und Sendern sowie einem weiteren, der Stromversorgung dienenden, weiter unten beschriebenen Teil SV galvanisch getrennt. Eine entsprechende galvanische Trennung kann auch in der Zentraleinheit zwischen dem Empfänger EMZ und dem Sender SEZ einerseits und dem Prozessor PRZ andererseits vorhanden sein.

Die peripheren Einheiten werden über die Busleitung aus der Spannungsquelle SQ mit Energie versorgt. Die Schaltung der Stromversorgungteile SV ist so ausgebildet, daß eine periphere Einheit auch während des Betriebes an die Busleitung angeschlossen werden kann, ohne daß eine laufende Datenübertragung gestört wird. Der Stromversorgungsteil SV enthält drei Schalter S1, S2, S3, die, wenn die Einheit nicht angeschlossen ist, geöffnet sind. Wird die Einheit an die Busleitung angeschlossen, fließt während der Zeiten, in denen das Signal auf der Busleitung H ist, ein Ladestrom über eine Diode D und einen Widerstand R in einen Versorgungskondensator C. Der Widerstand R ist so gewählt, daß dieser Ladestrom eine etwaige laufende Datenübertragung nicht stört, d. h., die Amplitude der Binärsignale bleibt so groß, daß die Signale von den Empfängern EM detektiert werden können. Die Spannung am Kondensator C wird von einer Schwellwertstufe SW überwacht. Erreicht die Ladespannung einen vorgegebenen Wert, mit der die periphere Einheit betrieben werden kann, schließt die Schwellwertstufe SW den Schalter S2, so daß die Spannung am Kondensator C an einen Gleichspannungswandler GW gelangt. Dessen Ausgangsspannung wird als Versorgungsspannung der Steuerung ST zugeführt, so daß diese zu arbeiten beginnt. Zunächst schließt sie den dritten Schalter S3, damit die Spannung des Kondensators C als Betriebsspannung dem Empfänger EM zugeführt wird. Die Steuerung kann darauf die Signale auf der Busleitung empfangen und sich in die laufenden Telegramme einsynchronisieren. In den Zeiten, in denen keine Daten übertragen werden und das Signal auf der Busleitung deshalb H ist, wird der erste Schalter S1 geschlossen und der Ladekondensator C aufgeladen. Die Ladezeiten sind z. B. die Pausenzeiten, die zur Synchronisation und Verhinderung von Schlupf zwischen Telegrammen notwendig sind. Es ist jedoch auch möglich, daß die Zentraleinheit ZE eine Meldung an alle peripheren Einheiten gibt, mit der diese aufgefordert werden, ihre Schalter S1 zum Laden zu schließen. Die Ladezeit kann dadurch beendet werden, daß die Zentraleinheit die Busleitung für eine bestimmte Zeit kurzschließt. Dies ist das Signal für alle peripheren Einheiten, den Versorgungskondensator durch Öffnen des Schalters S1 von der Busleitung zu trennen und sich auf Datenempfang zu schalten. Das folgende Telegramm kann dann in üblicher Weise übertragen werden. Eine Nachladung kann auch von einer peripheren Einheit veranlaßt werden, indem sie mit dem Sender SE die Busleitung für eine bestimmte Zeit kurzschließt.

Die Erfindung ist vorteilhaft für Netzwerke mit einer zweiadrigen Busleitung verwendbar, über die die Daten seriell übertragen werden. Sie kann aber auch bei Busleitungen mit mehreren Adern eingesetzt werden, von denen dann über zwei Binärsignale und die Versorgungsenergie übertragen werden.

### Ansprüche

1. Schaltungsanordnung zum Übertragen von binären Signalen und Energie über eine Leitung (BL1, BL2), an die eine zentrale Einheit (ZE), eine Stromversorgungseinheit, mehrere periphere Einheiten (PE1, PE2 ...) mit jeweils einem Sender (SE), einem Empfänger (EM), einer Steuerung (ST) und einem Versorgungskondensator (C) als Energiespeicher angeschlossen sind, **dadurch gekennzeichnet,** daß der Versorgungskondensator (C) an die Leitung (BL1, BL2) über eine Diode (D) angeschlossen ist, die für die dem H-Zustand des binären Signals entsprechende Spannung auf der Leitung in Durchlaßrichtung gepolt ist.

2. Schaltungsanordnung nach Anspruch 1, **dadurch gekennzeichnet,** daß in Reihe zur Diode (D) und dem Versorgungskondensator (C) ein Widerstand (R) geschaltet ist, der den Ladestrom des Versorgungskondensators (C) auf einen solchen Wert begrenzt, daß die Amplitude der Binärsignale auf der Leitung einen vorgegebenen Wert nicht unterschreitet.

3. Schaltungsanordnung nach Anspruch 1 oder 2, **dadurch gekennzeichnet,** daß in Reihe zur Diode (D) und dem Kondensator (C) ein erster Schalter (51) liegt, der während vorgegebener Zeiten, in denen H-Signal auf der Leitung liegt, geschlossen ist.

4. Schaltungsanordnung nach Anspruch 1 bis 3, **dadurch gekennzeichnet,** daß die Steuerung (ST) an den Versorgungskondensator (C) über einen zweiten Schalter (S2) angeschlossen ist, der von einer Schwellwertstufe (SW) geschlossen wird, wenn die Kondensatorspannung größer als ein vorgegebener, der Betriebsspannung der Steuereinheit entsprechender Betrag ist.

5. Schaltungsanordnung nach einem der Ansprüche 1 bis 4, **dadurch gekennzeichnet,** daß der Ausgangsstrom und die Ausgangsspannung der Stromversorgungseinheit auf für eigensichere Anlage zulässige Werte begrenzt sind.